# FASCICULE DE BREVET EUROPEEN

(11) **EP 3 070 802 B1**
(45) Date de publication et mention de la délivrance du brevet: **02.10.2019**
(21) Numéro de dépôt: 16161241.1
(22) Date de dépôt: 18.03.2016
(51) Int. Cl.: H02J 3/14, H02J 3/32, H02J 3/38, H02J 13/00

(54) **PROCÉDÉ ET SYSTÈME DE GESTION D'ÉNERGIE**
ENERGIEMANAGEMENTVERFAHREN UND -SYSTEM
METHOD AND SYSTEM FOR ENERGY MANAGEMENT

(30) Priorité: 18.03.2015 FR 1500532
(43) Date de publication de la demande: 21.09.2016
(73) Titulaire: THALES, 92400 Courbevoie (FR)
(72) Inventeur: COUTHOUIS, Daniel, 49309 CHOLET (FR); LIRONDIERE, Christian, 49309 CHOLET (FR); BASLE, Eric, 49309 CHOLET (FR); ABELARD, Ludivine, 49309 CHOLET (FR); LETARD, Alain, 49309 CHOLET (FR); DE KERSABIEC, Christian, 92622 GENNEVILLIERS CEDEX (FR)
(74) Mandataire: Lavoix

(56) Documents cités:
- EP-A2- 2 375 528
- EP-A2- 2 501 011
- WO-A1-2006/077569
- WO-A1-2014/049269

## Description

La présente invention concerne un procédé de gestion d'énergie entre des organes. La présente invention se rapporte aussi à un produit programme d'ordinateur et à un support d'informations associé. La présente invention concerne aussi une installation de gestion propre à mettre en oeuvre le procédé de gestion.

Le document EP 2375528 A2 décrit un procédé de gestion d'énergie centralisé comprenant une étape de recueil de données relatives à des éléments de stockage d'énergie connectées au réseau de distribution.

EP 2501011 A2 décrit un procédé de gestion d'énergie centralisé conçu pour gérer une pluralité de réseaux locaux.

WO 2006/077569 A1 décrit un procédé centralisé de gestion d'énergie pour une pluralité de sources modulaires et indépendantes une de l'autre.

Il est connu de l'état de la technique un système de production d'énergie propre à distribuer l'énergie produite à des consommateurs via un réseau de transport d'énergie.

Cependant, un tel système d'énergie est surdimensionné pour prendre en compte tous les pics de consommation envisageables et fonctionne donc dans des conditions non-optimales.

Il existe donc un besoin pour un procédé de gestion d'énergie permettant d'adapter la production d'énergie à la consommation d'énergie.

A cet effet, l'invention a pour objet un procédé de gestion d'énergie dans une installation électrique, l'installation comprenant :
- au moins un organe de consommation d'énergie électrique,
- au moins un organe de production d'énergie électrique,
- au moins un organe de stockage d'énergie électrique,
- un réseau de transport d'énergie, chaque organe étant propre à être connecté ou déconnecté du réseau de transport d'énergie, le réseau de transport étant divisé en au moins deux sous-réseaux, chaque sous-réseau regroupant au moins un organe,
- un module de traitement pour chaque sous-réseau,
- un réseau de communication connecté à chaque organe et à chaque module de traitement, chaque organe étant propre à émettre des données sur le réseau de communication vers au moins un organe et vers chaque module de traitement,
le procédé comprenant au moins une étape de :
- fourniture de la nature du fonctionnement de chaque organe, la nature du fonctionnement de chaque organe étant choisie dans le groupe comprenant : un organe de production d'énergie, un organe de consommation d'énergie et un organe de stockage d'énergie,
- fourniture d'un premier indicateur relatif à une priorité de fonctionnement de chaque organe,
- fourniture d'un deuxième indicateur relatif à un volume d'énergie nominal de fonctionnement de chaque organe,
- détermination, pour chaque organe, d'un indicateur global à partir de la nature, du premier indicateur et du deuxième indicateur fournis,
- calcul d'un premier indicateur moyen à partir d'au moins un indicateur global d'un organe de production et d'au moins un indicateur global d'un organe de consommation,
- comparaison, pour chaque organe, du premier indicateur au premier indicateur moyen, et
- connexion ou déconnexion de chaque organe au réseau de transport d'énergie en fonction de la comparaison et de la nature de chaque organe.

Suivant des modes de réalisation particuliers, le procédé comprend une ou plusieurs des caractéristiques suivantes, prises isolément ou suivant toutes les combinaisons techniquement possibles :
- lorsque l'organe est un organe de production ou un organe de stockage, le premier indicateur est le coût minimal de vente d'énergie, et
- lorsque l'organe est un organe de consommation ou un organe de stockage, le premier indicateur est le coût maximal d'achat d'énergie.
- lorsque l'organe est un organe de production ou un organe de stockage, le deuxième indicateur est le volume d'énergie souhaité à la vente, et
- lorsque l'organe est un organe de consommation ou un organe de stockage, le deuxième indicateur est le volume d'énergie souhaité à l'achat.
- au moins un organe, parmi les organes de consommation et les organes de production, comprend deux sous-organes, le procédé comprenant, en outre, la fourniture du premier indicateur et du deuxième indicateur de chaque sous-organe, au moins la valeur du premier indicateur d'un sous-organe étant différente de la valeur du premier indicateur de l'autre sous-organe du même organe et/ou au moins la valeur du deuxième indicateur d'un sous-organe étant différente de la valeur du deuxième indicateur de l'autre sous-organe du même organe.
- pour chaque organe comprenant deux sous-organes,
   - lorsque l'organe est un organe de production ou un organe de stockage, le deuxième indicateur de l'un des sous-organes de l'organe est le volume minimal d'énergie souhaité à la vente, et
   - lorsque l'organe est un organe de consommation ou un organe de stockage, le deuxième indicateur de l'un des sous-organes de l'organe est le volume minimal d'énergie souhaité à l'achat.
- les indicateurs fournis pour chaque organe dépendent d'au moins une caractéristique choisie dans le groupe comprenant : l'heure du jour, la période de l'année, la météo, les besoins opérationnels en énergie de l'organe, l'autonomie en énergie de l'organe, la capacité de l'organe à produire de l'énergie, l'arrêt ou le fonctionnement de l'organe, les retours d'expérience sur le fonctionnement de l'organe, les défaillances de l'organe et une anticipation des besoins énergétiques de l'organe.
- lorsque l'organe est un organe de production ou un organe de stockage, l'organe est connecté au réseau de transport d'énergie si le premier indicateur de l'organe est inférieur ou égal au premier indicateur moyen, et
- lorsque l'organe est un organe de consommation ou un organe de stockage, l'organe est connecté au réseau de transport d'énergie si le premier indicateur de l'organe est supérieur ou égal au premier indicateur moyen.
- lorsque l'organe est un organe de production ou un organe de stockage, l'organe est déconnecté du réseau de transport d'énergie si le premier indicateur de l'organe est supérieur au sens strict au premier indicateur moyen, et
- lorsque l'organe est un organe de consommation ou un organe de stockage, l'organe est déconnecté du réseau de transport d'énergie si le premier indicateur de l'organe est inférieur au sens strict au premier indicateur moyen.

L'invention concerne également un produit programme d'ordinateur comprenant des instructions logicielles, les instructions logicielles mettant en oeuvre un procédé tel que décrit précédemment, lorsque les instructions logicielles sont exécutées par un ordinateur.

L'invention a aussi pour objet un support d'informations sur lequel est mémorisé un produit programme d'ordinateur tel que décrit ci-dessus.

L'invention se rapporte également à une installation électrique de gestion d'énergie comprenant :
- au moins un organe de consommation d'énergie électrique,
- au moins un organe de production d'énergie électrique,
- au moins un organe de stockage d'énergie électrique,
- un réseau de transport d'énergie, chaque organe étant propre à être connecté ou déconnecté du réseau de transport d'énergie, le réseau de transport étant divisé en au moins deux sous-réseaux, chaque sous-réseau regroupant au moins un organe,
- un module de traitement pour chaque sous-réseau,
- un réseau de communication connecté à chaque organe et à chaque module de traitement, chaque organe étant propre à émettre des données sur le réseau de communication vers au moins un organe et vers chaque module de traitement,
- chaque module de traitement étant configuré pour :
   - recevoir la nature du fonctionnement de chaque organe, la nature du fonctionnement de chaque organe étant choisie dans le groupe comprenant : un organe de production d'énergie, un organe de consommation d'énergie et un organe de stockage d'énergie,
   - recevoir un premier indicateur relatif à une priorité de fonctionnement de chaque organe,
   - recevoir un deuxième indicateur relatif à un volume d'énergie nominal de fonctionnement de chaque organe,
   - déterminer, pour chaque organe, un indicateur global à partir de la nature, du premier indicateur et du deuxième indicateur fournis,
   - calculer un premier indicateur moyen à partir d'au moins un indicateur global d'un organe de production et d'au moins un indicateur global d'un organe de consommation,
   - comparer, pour chaque organe, le premier indicateur au premier indicateur moyen, et
   - connecter ou déconnecter chaque organe au réseau de transport d'énergie en fonction de la comparaison et de la nature de chaque organe.

L'invention a, également, pour objet un procédé selon la revendication 1.

Suivant des modes de réalisation particuliers, le procédé comprend une ou plusieurs des caractéristiques des revendications 2 à 8, prises isolément ou suivant toutes les combinaisons techniquement possibles.

L'invention porte aussi sur un produit programme d'ordinateur selon la revendication 9.

L'invention concerne, en outre, un support d'informations selon la revendication 10.

L'invention concerne, également, une installation selon la revendication 11.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une vue schématique d'un exemple d'une installation de gestion d'énergie,
- figure 2, une vue schématique d'un exemple d'un module de traitement et d'un produit programme d'ordinateur de l'installation de la figure 1,
- figure 3, un exemple de détermination d'un premier indicateur moyen suivant une loi de l'offre et de la demande, et
- figure 4, un ordinogramme d'un exemple de mise en oeuvre d'un procédé de gestion d'énergie.

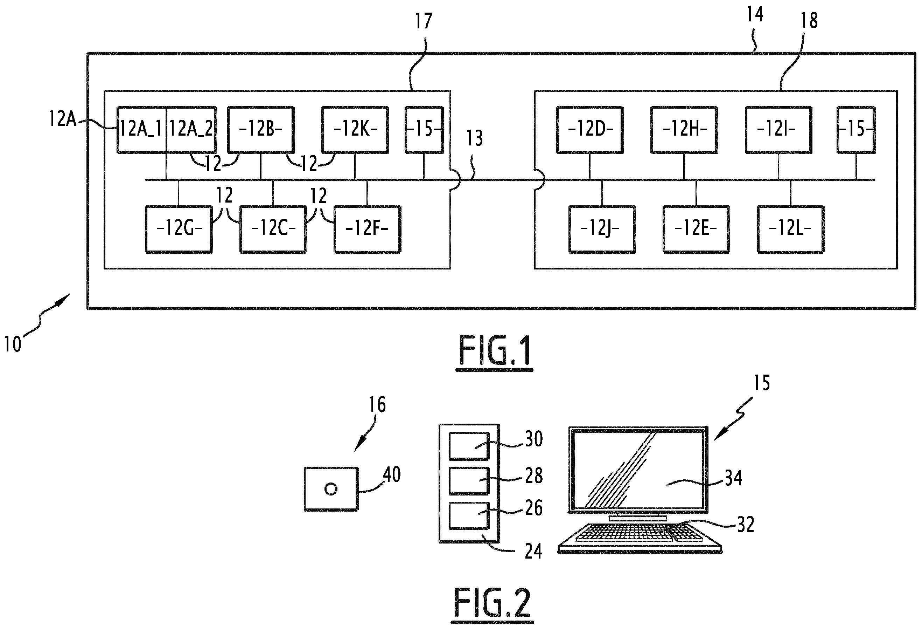

Une installation 10 de gestion d'énergie est représentée sur la figure 1. Une telle installation 10 est une installation électrique.

L'installation 10 comprend un ensemble d'organes 12, un réseau de communication 13, un réseau de transport d'énergie 14, un ensemble de modules de traitement 15 et un produit programme d'ordinateur 16. Le produit programme d'ordinateur est illustré sur la figure 2.

Chaque organe 12 présente une nature N, un état et un ensemble d'indicateurs relatifs au fonctionnement de l'organe 12.

La nature N de chaque organe 12 est choisie dans le groupe comprenant : un organe de production d'énergie, un organe de consommation d'énergie et un organe de stockage d'énergie.

L'installation 10 comprend au moins un organe 12 de production d'énergie, au moins un organe 12 de consommation d'énergie et au moins un organe 12 de stockage d'énergie.

Dans le mode de réalisation illustré sur la figure 1, l'installation 10 comprend six organes 12 : cinq organes de consommation d'énergie 12A, 12B, 12C, 12D, 12E, cinq organes de production d'énergie 12F, 12G, 12H, 12I, 12J et deux organes de stockage d'énergie 12K, 12L.

Un organe 12 de production d'énergie est un organe propre à produire de l'énergie. Un organe 12 de production d'énergie est, par exemple, un barrage hydroélectrique, une centrale hydroélectrique, une centrale nucléaire, une centrale au charbon, une centrale au fioul, une centrale thermique au gaz, un groupe électrogène, une éolienne, un panneau solaire ou encore une turbine à vapeur biomasse.

Un organe 12 de consommation d'énergie est un organe propre à consommer de l'énergie. Un organe 12 de consommation d'énergie est, par exemple, un réseau électrique d'éclairage, un réseau électrique de chauffage ou encore un équipement opérationnel.

Un organe 12 de stockage d'énergie est un organe propre à stocker de l'énergie. Un organe 12 de stockage d'énergie est, par exemple, un accumulateur d'énergie électrique tel qu'une batterie. Un organe 12 de stockage d'énergie est à la fois un producteur d'énergie lors de sa décharge et un consommateur d'énergie lors de sa charge.

Chaque organe 12 fonctionne selon deux états : un premier état pour lequel l'organe 12 est en marche et un deuxième état pour lequel l'organe 12 est à l'arrêt. Lorsque l'organe 12 est dans le premier état, l'organe 12 est en marche et est donc capable, selon la nature N de l'organe 12, de produire et/ou de consommer de l'énergie. Lorsque l'organe 12 est dans le deuxième état, l'organe 12 n'est capable ni de produire, ni de consommer de l'énergie.

Les indicateurs relatifs au fonctionnement de chaque organe 12 comportent des informations sur la consommation et/ou la production d'énergie de l'organe 12. Les indicateurs des organes 12 sont décrits ultérieurement.

Le réseau de communication 13 est connecté à chaque organe 12 et à chaque module de traitement 15. Chaque organe 12 est propre à émettre des données sur le réseau de communication 13 vers au moins un organe 12 et vers chaque module de traitement 15. La connexion entre chaque organe 12 et le réseau de communication 13 est, par exemple, établie par liaison filaire ou par liaison hertzienne.

Le réseau de communication 13 est, par exemple, un bus de données. Un bus de données est un système de communication partagé entre plusieurs composants d'un système numérique et destiné au transfert des données entre les composants du système.

Chaque organe 12 est propre à être connecté ou déconnecté du réseau de transport d'énergie 14.

Le réseau de transport d'énergie 14 est configuré, d'une part, pour recevoir l'énergie produite par les organes 12 de production d'énergie ou de stockage d'énergie connectés audit réseau de transport d'énergie 14.

D'autre part, le réseau de transport d'énergie 14 est propre à distribuer l'énergie reçue aux organes 12 de consommation d'énergie ou de stockage d'énergie connectés audit réseau de transport d'énergie 14.

La connexion entre chaque organe 12 et le réseau de transport d'énergie 14 est, par exemple, établi par un protocole « machine to machine » (de l'anglais « communication de machine à machine »).

Le réseau de transport d'énergie 14 est divisé en au moins deux sous-réseaux de sorte que chaque sous-réseau regroupe au moins un organe 12.

Les organes 12 appartenant à un même sous-réseau sont, par exemple, définis par un opérateur lors de la configuration initiale de l'installation 10.

Dans le mode de réalisation illustré en figure 1, le réseau de transport d'énergie 14 comprend deux sous-réseaux 17 et 18. Ainsi, les organes de consommation d'énergie 12A, 12B, 12C, de production d'énergie 12F, 12G et de stockage d'énergie 12K appartiennent à un premier sous-réseau 17 du réseau de transport d'énergie 14. Les organes de consommation d'énergie 12D, 12E, de production d'énergie 12H, 12I, 12J et de stockage d'énergie 12L appartiennent à un deuxième sous-réseau 18 du réseau de transport d'énergie 14.

L'interaction du produit programme d'ordinateur 16 avec chaque module de traitement 15 permet de mettre en oeuvre un procédé de gestion d'énergie entre les organes 12 de l'installation 10.

Pour cela, chaque module de traitement 15 est connecté au réseau de communication 13 et au réseau de transport d'énergie 14.

Chaque module de traitement 15 est, de préférence, un ordinateur.

Plus généralement, chaque module de traitement 15 est un calculateur électronique propre à manipuler et/ou transformer des données représentées comme des quantités électroniques ou physiques dans des registres du module de traitement 15 et/ou des mémoires en d'autres données similaires correspondant à des données physiques dans les mémoires, des registres ou d'autres types de dispositif d'affichage, de transmission ou de mémorisation.

Comme illustré sur la figure 2, chaque module de traitement 15 comporte un processeur 24 comprenant une unité de traitement de données 26, des mémoires 28 et un lecteur 30 de support d'informations. Chaque module de traitement 15 comprend également un clavier 32 et une unité d'affichage 34.

Le produit programme d'ordinateur 16 comporte un support d'informations 40.

Le support d'informations 40 est un support lisible. Un support d'informations 40 est un support lisible par chaque module de traitement 15, usuellement par chaque unité de traitement de données 26. Le support d'informations 40 est un médium adapté à mémoriser des instructions électroniques et capable d'être couplé à un bus d'un système informatique.

A titre d'exemple, le support d'informations 40 est une disquette ou disque souple (de la dénomination anglaise de « *floppy disc* »), un disque optique, un CD-ROM un disque magnéto-optique, une mémoire ROM, une mémoire RAM, une mémoire EPROM, une mémoire EEPROM, une carte magnétique ou une carte optique.

Sur le support d'informations 40 est mémorisé un programme d'ordinateur comprenant des instructions de programme.

Le programme d'ordinateur est chargeable sur chaque unité de traitement de données 26 et est adapté pour être entraîner la mise en oeuvre du procédé de gestion d'énergie lorsque le programme d'ordinateur est mis en oeuvre sur chaque module de traitement 15.

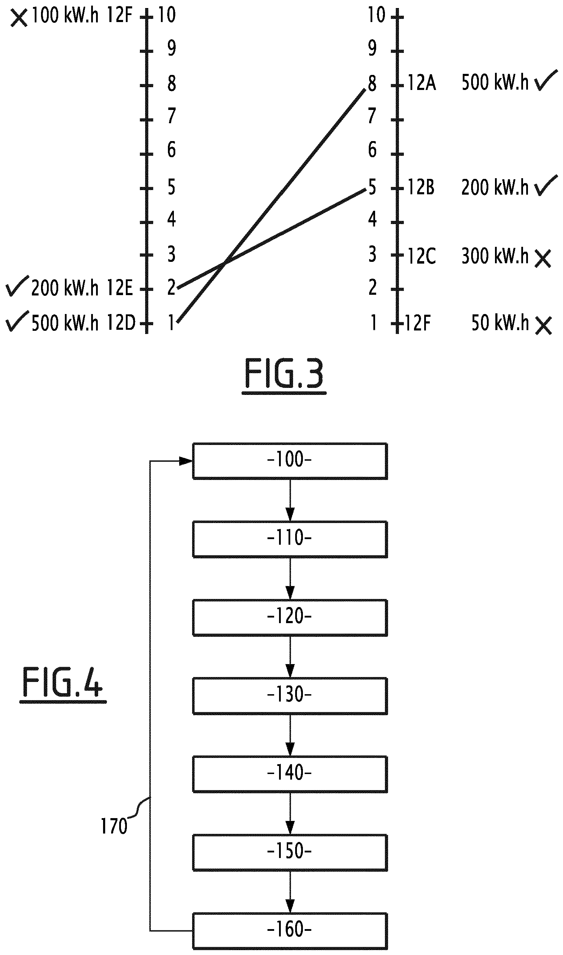

Le fonctionnement de chaque module de traitement 15 en interaction avec le produit programme d'ordinateur 16 est maintenant décrit en référence à la figure 4 qui illustre schématiquement un exemple de mise en oeuvre du procédé de gestion d'énergie.

Initialement, le procédé de gestion comporte une étape 100 de fourniture de la nature N du fonctionnement de chaque organe 12 dans le premier état. En effet, seuls les organes 12 dans le premier état sont propres à communiquer des données via le réseau de communication 13.

Ainsi, chaque organe 12 dans le premier état transmet, via le réseau de communication 13, à au moins un autre organe 12 et à chaque module de traitement 15, la nature N de l'organe 12.

Puis, le procédé comporte une étape 110 de fourniture d'un premier indicateur I1 relatif à une priorité de fonctionnement de chaque organe 12 dans le premier état.

Le premier indicateur I1 est, pour chaque organe 12, relatif à un coût nominal acceptable par chaque organe 12.

Dans la suite de la description, le coût est défini, à titre d'exemple, par une échelle de priorité prenant des valeurs entières comprises au sens large entre 1 et 10. Une valeur de 10 sur l'échelle de priorité désignant un souhait hautement prioritaire d'achat d'énergie pour un consommateur et un souhait non prioritaire de vente d'énergie pour un producteur. Une valeur de 1 sur l'échelle de priorité désignant un souhait non prioritaire d'achat d'énergie pour un consommateur et un souhait hautement prioritaire de vente d'énergie pour un producteur.

En variante, le coût est défini par une échelle de valeurs décimales allant de zéro à l'infini.

Encore en variante, le coût est défini en unité de litres de carburant par kilowattheure produit (L/kW.h), en unité d'euros par kilowattheure produit (€/kW.h) ou en unité de dollars par kilowattheure produit ($/kW.h).

Lorsque l'organe 12 est un organe de production ou un organe de stockage, le premier indicateur I1 est le coût minimal de vente d'énergie. Un tel coût minimal se comprend comme le souhait d'un organe 12 de production ou de stockage de vendre l'énergie produite. Ainsi, plus le coût minimal est faible, plus l'organe 12 de production ou de stockage souhaite vendre l'énergie produite.

Lorsque l'organe 12 est un organe de consommation ou un organe de stockage, le premier indicateur I1 est le coût maximal d'achat d'énergie. Un tel coût maximal se comprend comme le souhait d'un organe 12 de consommation ou de stockage d'acheter de l'énergie. Ainsi, plus le coût maximal est faible, plus l'organe 12 de consommation ou de stockage souhaite acheter de l'énergie.

Ensuite, le procédé comporte une étape 120 de fourniture d'un deuxième indicateur I2 relatif à un volume d'énergie nominal de fonctionnement de chaque organe 12 dans le premier état.

Le volume d'énergie nominal de fonctionnement d'un organe 12 est le volume usuellement requis par l'organe 12 pour fonctionner dans des conditions optimales.

Le deuxième indicateur I2 est, par exemple, exprimé en kilowattheures (kW.h).

Lorsque l'organe 12 est un organe de production ou un organe de stockage, le deuxième indicateur I2 est le volume d'énergie souhaité à la vente. Ainsi, dans ce cas, l'organe 12 dispose d'un volume d'énergie qu'il souhaite vendre au moins au coût minimal de vente d'énergie fixé par le premier indicateur I1 de l'organe 12.

Lorsque l'organe 12 est un organe de consommation ou un organe de stockage, le deuxième indicateur I2 est le volume d'énergie souhaité à l'achat. Ainsi, dans ce cas, l'organe 12 souhaite acheter un volume d'énergie donné au plus au coût maximal d'achat d'énergie fixé par le premier indicateur I1 de l'organe 12.

En complément, lorsqu'au moins un organe 12, parmi les organes de consommation et les organes de production, comprend deux sous-organes, le procédé comporte en outre, la fourniture du premier indicateur I1 et du deuxième indicateur I2 de chaque sous-organe. Au moins la valeur du premier indicateur I1 d'un sous-organe est différente de la valeur du premier indicateur I1 de l'autre sous-organe du même organe et/ou au moins la valeur du deuxième indicateur I2 d'un sous-organe est différente de la valeur du deuxième indicateur I2 de l'autre sous-organe du même organe.

En effet, pour chaque organe 12 comprenant deux sous-organes, lorsque l'organe 12 est un organe de production, le deuxième indicateur I2 de l'un des sous-organes de l'organe 12 est le volume minimal d'énergie souhaité à la vente quelle que soit la valeur du premier indicateur I1 du sous-organe. Ainsi, pour un tel sous-organe, le premier indicateur I1 prend une valeur minimale et le deuxième indicateur I2 prend une valeur relative au volume d'énergie critique que souhaite vendre, quel que soit le prix de vente, l'organe 12. Dans ce cas, l'organe 12 de production d'énergie est prêt à vendre « à perte », c'est à dire à vendre à un prix même inférieur au « prix du marché ».

Lorsque l'organe 12 est un organe de consommation, le deuxième indicateur I2 de l'un des sous-organes de l'organe 12 est le volume minimal d'énergie souhaité à l'achat quelle que soit la valeur du premier indicateur I1 du sous-organe. Ainsi, pour un tel sous-organe, le premier indicateur I1 prend une valeur maximale et le deuxième indicateur I2 prend une valeur relative au volume d'énergie critique que souhaite acheter, quel que soit le prix d'achat, l'organe 12. Dans ce cas, l'organe 12 de consommation est prêt à acheter de l'énergie à un prix même supérieur au « prix du marché ». Le prix du marché est le prix d'un bien déterminé par la loi de l'offre et la demande dans les régimes d'économie de marché. Cette notion sera développée ultérieurement dans la description.

Le volume d'énergie critique de fonctionnement d'un organe est le volume minimal nécessaire pour assurer les fonctions vitales de l'organe.

Par exemple, l'organe de consommation 12A comprend deux sous organes 12A_1 et 12A_2 illustrés sur la figure 1.

Les organes 12 de stockage d'énergie ne comportent pas de sous-organes puisque de tels organes 12 servent de tampon pour assurer la production ou la consommation d'énergie dans des moments critiques où la consommation est importante et la production est faible ou inversement.

Dans la suite de la description, par souci de simplification, le premier sous-organe de chaque organe 12 a un premier indicateur I1 et un deuxième indicateur I2 identiques respectivement au premier indicateur I1 et au deuxième indicateur I2 de l'organe 12 correspondant. Le deuxième sous-organe de chaque organe 12 a un premier indicateur I1 de valeur minimale, respectivement maximale sur l'échelle de priorité et un deuxième indicateur I2 relatif au volume minimal d'énergie souhaité à la vente, respectivement à l'achat, en fonction de la nature N de l'organe 12 correspondant. Par conséquent, le premier indicateur I1 du deuxième sous-organe est inférieur ou égal au premier indicateur I1 du premier sous-organe du même organe 12. En effet, le volume d'énergie critique ne peut pas être supérieur au sens strict au volume d'énergie nominal.

Les indicateurs I1, I2 de chaque organe 12 sont, par exemple, calculés par chaque organe 12 en fonction d'au moins une caractéristique choisie dans le groupe comprenant : l'heure du jour, la période de l'année, la météo, les besoins opérationnels en énergie de l'organe 12, l'autonomie en énergie de l'organe 12, la capacité de l'organe 12 à produire de l'énergie, l'arrêt ou le fonctionnement de l'organe 12, les retours d'expérience sur le fonctionnement de l'organe 12, les défaillances de l'organe 12 ou une anticipation du besoin énergétique de l'organe 12.

En variante, les valeurs des indicateurs I1, I2 sont fixées par un ou plusieurs opérateurs.

Par exemple, les organes 12 appartenant au premier sous-réseau 17 illustré en figure 1 fournissent via le réseau de communication 13, les données répertoriées dans le tableau 1 :

**Tableau 1**

| Organes | Nature N | Premier indicateur I1 | Deuxième indicateur I2 |
|---|---|---|---|
| 12A_1 | Consommateur (hôpital) | 8 | 500 kW.h |
| 12A_2 | | 10 | 100 kW.h |
| 12B | Consommateur (éclairage d'une habitation) | 5 | 200 kW.h |
| 12C | Consommateur (éclairage d'un stade de football) | 3 | 300 kW.h |
| 12F | Producteur (éolienne) | 1 | 500 kW.h |
| 12G | Producteur (panneau solaire) | 2 | 200 kW.h |
| 12K | Stockage (en décharge) | 10 | 100 kW.h |
| | Stockage (en charge) | 1 | 50 kW.h |

Ainsi, l'organe de consommation 12A qui est un hôpital a un besoin prioritaire en énergie puisque le premier indicateur I1 du premier sous-organe 12A_1 est relativement élevé sur l'échelle de priorité. L'organe de consommation 12A est donc prêt à mettre un coût important pour être approvisionné en énergie, ce qui se traduit par une valeur de 8 sur l'échelle de priorité. En outre, l'organe de consommation 12A a également un besoin critique en énergie indiqué par les valeurs du premier indicateur I1 et du deuxième indicateur I2 du deuxième sous-organe 12A_2 de l'organe de consommation 12A. Pour satisfaire ce besoin critique, l'organe de consommation 12A est prêt à acheter de l'énergie à un producteur ou à un réservoir quel que soit le coût de l'énergie, ce qui se traduit par une valeur maximale du premier indicateur I1.

L'organe de consommation 12B qui est le système d'éclairage d'une habitation a un besoin moins prioritaire en énergie que l'hôpital, ce qui se traduit par une valeur de 5 sur l'échelle de priorité. L'organe de consommation 12B souhaite donc payer un coût plus faible pour être approvisionné en énergie et préfère prendre le risque de ne pas être approvisionné en énergie plutôt que de payer un coût plus élevé.

Il en va de même pour l'organe de consommation 12C qui est un stade de football. En effet, la valeur du premier indicateur I1 de l'organe de consommation 12C traduit un besoin encore moins prioritaire en énergie que l'organe de consommation 12B.

L'organe de production 12F qui est une éolienne souhaite vendre sa production d'énergie en priorité car une telle production est renouvelable. Cela se traduit par une valeur de 1 sur l'échelle de priorité. L'énergie produite est dite à « bas coût ».

Il en est de même pour l'organe de production 12G d'énergie solaire, bien que l'énergie éolienne soit vendue en priorité.

L'organe de stockage 12K qui est une batterie à utiliser en cas d'urgence comporte deux couples de premier et de deuxième indicateurs I1, I2. Le premier couple de premier et de deuxième indicateurs I1, I2 traduit la décharge de l'organe de stockage 12K au cours de laquelle l'organe de stockage 12K fonctionne comme un organe de production. Le deuxième couple de premier et de deuxième indicateurs I1, I2 traduit la charge de l'organe de stockage 12K au cours de laquelle l'organe de stockage 12K fonctionne comme un organe de consommation.

Lorsque l'organe de stockage 12K fonctionne comme un organe de production, l'organe de stockage 12K souhaite vendre sa production d'énergie à un coût plus élevé que les organes de production 12F et 12G puisque la fonction d'une batterie d'urgence est d'approvisionner en énergie le réseau de transport d'énergie 14 seulement lors d'une surconsommation sur le réseau 20. Cela se traduit par une valeur de 10 sur l'échelle de priorité. L'énergie que souhaite vendre l'organe de stockage 12K est donc de manière relative la plus chère du marché et donc la moins probable d'être vendue.

Lorsque l'organe de stockage 12K fonctionne comme un organe de consommation, l'organe de stockage 12K souhaite acheter de l'énergie à un coût plus bas que les organes de consommation 12A et 12B puisque la fonction d'une batterie d'urgence est de consommer l'énergie du réseau de transport d'énergie 14 seulement lors d'une sous-consommation sur le réseau de transport 14. Cela se traduit par une valeur de 1 sur l'échelle de priorité. L'énergie que souhaite acheter l'organe de stockage 12K est donc de manière relative la moins chère du marché et donc la moins probable d'être achetée.

Dans une variante, les organes de stockage 12 sont utilisés pour réguler les pics de consommation et de production sur le réseau de transport 14, c'est-à-dire pour lisser dynamiquement les à-coups et écarts entre la consommation et la production d'énergie. Dans ce cas, les organes de stockage 12 affichent des premiers indicateurs I1 de valeur médiane, par exemple égale à 5.

Le procédé comprend ensuite une étape 130 de détermination, pour chaque organe 12, d'un indicateur global IG à partir de la nature N, du premier indicateur I1 et du deuxième indicateur I2 fournis.

L'indicateur global IG de chaque organe 12 comporte l'ensemble des critères utiles pour l'achat et/ou la vente d'énergie par chaque organe 12.

Par exemple, pour chaque organe 12, l'indicateur global IG est un quintuplet de coordonnées dont la première coordonnée est la nature N de l'organe 12, la deuxième coordonnée est le premier indicateur I1 du premier sous-organe de l'organe 12, la troisième coordonnée est le deuxième indicateur I2 du premier sous-organe de l'organe 12, la quatrième coordonnée est le premier indicateur I1 du deuxième sous-organe de l'organe 12 et la cinquième coordonnée est le deuxième indicateur I2 du deuxième sous-organe de l'organe 12. La première coordonnée prend, par exemple, la valeur 1 pour un organe 12 de consommation d'énergie, la valeur 2 pour un organe 12 de production d'énergie et la valeur 3 pour un organe 12 de stockage d'énergie. Les deuxième et quatrième coordonnées sont exprimées, par exemple, en unités de coût définies dans l'échelle de priorité décrite précédemment. Les troisième et cinquième coordonnées sont exprimées, par exemple, en kilowattheures. Ainsi, l'indicateur global IG de l'organe de consommation 12A est le quintuplet (1 ; 8 ; 500 ; 10 ; 500).

Lorsque l'organe 12 ne comporte pas de sous-organe, la valeur du premier indicateur I1 de l'organe 12 est inscrite dans la deuxième coordonnée, la valeur du deuxième indicateur I2 de l'organe 12 est inscrite dans la troisième coordonnée et les quatrième et cinquième coordonnées sont fixées à zéro. Ainsi, l'indicateur global IG de l'organe de production 12F est le quintuplet (2 ; 1 ; 500 ; 0 ; 0).

Lorsque l'organe 12 est un organe de stockage, la valeur du premier indicateur I1 de l'organe 12 en fonctionnement consommateur d'énergie est inscrite dans la deuxième coordonnée, la valeur du deuxième indicateur I2 en fonctionnement consommateur d'énergie est inscrite dans la troisième coordonnée, la valeur du premier indicateur I1 de l'organe 12 en fonctionnement producteur d'énergie est inscrite dans la quatrième coordonnée et la valeur du deuxième indicateur I2 en fonctionnement producteur d'énergie est inscrite dans la cinquième coordonnée. Ainsi, l'indicateur global IG de l'organe de stockage 12K est le quintuplet (3 ; 10 ; 100 ; 1 ; 50).

Puis, le procédé comprend une étape 140 de calcul d'un premier indicateur moyen I1_M à partir d'au moins un indicateur global IG d'un organe 12 de production et d'au moins un indicateur global IG d'un organe 12 de consommation.

Le calcul du premier indicateur moyen I1_M suit une loi de l'offre et de la demande. La loi de l'offre et de la demande représente le modèle principal de l'économie de marché et repose sur l'équilibre entre la quantité d'un certain bien offert et la demande d'un tel bien. Suivant la loi de l'offre et de la demande, la quantité d'un bien varie en fonction de l'importance de l'offre et de la demande. Ainsi, si la demande pour un bien augmente, le prix de ce bien augmentera aussi. Si l'offre dépasse la demande pour un bien, le prix du bien diminuera jusqu'à ce qu'il y ait un équilibre entre la quantité de bien produite et le prix du bien. Pour un acheteur, plus le prix d'un bien est faible, plus il est disposé à acheter le bien. Pour un vendeur, plus le prix du bien est élevé, plus il est disposé à vendre le bien.

Le premier indicateur moyen I1_M est un coût de même unité que le premier indicateur I1 pour lequel les quantités d'énergie souhaitées à l'achat par les consommateurs sont égales aux quantités d'énergie souhaitées à la vente par les producteurs. Le premier indicateur moyen I1_M est aussi appelé « prix du marché ».

Un exemple de calcul du premier indicateur moyen I1_M est expliqué dans ce qui suit en référence à la figure 3.

Dans cet exemple, le calcul du premier indicateur I1 comprend une première phase de compensation des volumes souhaités à l'achat par les organes de consommation 12 avec les volumes souhaités à la vente par les organes de production 12, tant que le premier indicateur I1 de l'organe de consommation 12 dont le premier indicateur I1 est le plus haut, parmi les organes 12 de consommation dont le volume à l'achat n'est pas compensé, est supérieur ou égal au premier indicateur I1 de l'organe 12 de production dont le premier indicateur I1 est le plus bas, parmi les organes 12 de production dont le volume à la vente n'est pas compensé. Les volumes sont donnés par les deuxièmes indicateurs I2 de chaque organe 12.

Lorsque le premier indicateur I1 de l'organe 12 de consommation dont le premier indicateur I1 est le plus haut est strictement inférieur au premier indicateur I1 de l'organe 12 de production dont le premier indicateur I1 est le plus bas, le premier indicateur I1 de l'organe de consommation est appelé « seuil consommateur » et le premier indicateur I1 de l'organe 12 de production est appelé « seuil producteur ». Le dernier organe 12 de consommation dont le deuxième indicateur I2 est compensé est appelé « dernier consommateur » et le dernier organe 12 de production dont le deuxième indicateur I2 est compensé est appelé « dernier producteur ».

Puis, le calcul du premier indicateur I1 comprend une deuxième phase de calcul de la moyenne entre le seuil consommateur et le seuil producteur. Lorsque la moyenne calculée est strictement supérieure au premier indicateur I1 du dernier consommateur, le premier indicateur moyen I1_M est égal au premier indicateur I1 du dernier consommateur. Lorsque la moyenne calculée est strictement inférieure au premier indicateur I1 du dernier producteur, le premier indicateur moyen I1_M est égal au premier indicateur I1 du dernier producteur. Sinon, le premier indicateur moyen I1_M est égal à la moyenne calculée.

Le premier indicateur moyen I1_M prend donc en compte l'intégralité des coordonnées de l'indicateur global IG, c'est-à-dire la nature N des organes 12, le ou les premiers indicateurs I1 des organes 12 et le ou les deuxièmes indicateurs I2 des organes 12.

Ainsi, comme visible sur la figure 3, les volumes d'énergie entre les consommateurs prêts à acheter le plus cher et les producteurs prêts à vendre le moins cher sont échangés jusqu'à ce que le prix du consommateur soit incompatible avec le prix du producteur. Il est entendu par le terme « incompatible » que le prix du consommateur restant prêt à acheter le plus cher est strictement inférieur au prix du producteur restant prêt à vendre le moins cher. Le premier indicateur I1, c'est-à-dire le prix à l'achat, de valeur 3 de l'organe de consommation 12C est donc le seuil consommateur. Le premier indicateur I1, c'est-à-dire le prix de vente, de valeur 10 de l'organe de production 12F est le seuil producteur. L'organe de consommation 12B est le dernier consommateur et l'organe de production 12E est le dernier producteur. Ainsi, la moyenne calculée est égale à 6,5. La moyenne calculée étant strictement supérieure au premier indicateur I1 de l'organe de consommation 12B, le premier indicateur moyen I1_M est égal à la valeur du premier indicateur I1 de l'organe de consommation 12B, c'est-à-dire est égal à 5.

Dans l'exemple de la figure 3, par souci de simplification, seuls sont pris en compte les deuxièmes indicateurs correspondant à un volume d'énergie nominal de fonctionnement de chaque organe, c'est-à-dire les deuxièmes indicateurs des premiers sous-organes pour les organes présentant des sous-organes.

Le procédé comprend ensuite une étape 150 de comparaison, pour chaque organe 12, du premier indicateur I1 au premier indicateur moyen I1_M. Une telle comparaison revient à comparer le coût d'achat pour un organe 12 de consommation ou le coût de vente pour un organe 12 de production au prix du marché. Pour un organe 12 donné, le résultat de la comparaison est dit « supérieur » et est noté « + » lorsque le premier indicateur I1 est strictement supérieur au premier indicateur moyen I1_M. Le résultat de la comparaison est dit « inférieur » et est noté « - » lorsque le premier indicateur I1 est strictement inférieur à l'premier indicateur moyen I1_M. Le résultat de la comparaison est dit « égal » et est noté « = » lorsque le premier indicateur I1 est égal au premier indicateur moyen I1_M. Les résultats de la comparaison pour les organes 12 du premier sous-réseau 17 de la figure 1 sont exprimés dans le tableau 2 :

**Tableau 2**

| Organes | Nature N | Premier indicateur I1 | Résultat |
|---|---|---|---|
| 12A | Consommateur (hôpital) | 8 | + |
| 12B | Consommateur (éclairage d'une habitation) | 5 | = |
| 12C | Consommateur (éclairage d'un stade de football) | 3 | - |
| 12F | Producteur (éolienne) | 1 | - |
| 12G | Producteur (panneau solaire) | 2 | - |
| 12K | Stockage (en décharge) | 10 | + |
| | Stockage (en charge) | 1 | - |

Puis, le procédé comporte une étape 160 de connexion ou de déconnexion de chaque organe 12 au réseau de transport d'énergie 14 en fonction des résultats de comparaison et de la nature N de chaque organe 12.

Lorsque l'organe 12 est un organe de production ou un organe de stockage, l'organe 12 est connecté au réseau de transport d'énergie 14 si le premier indicateur I1 de l'organe 12 est inférieur ou égal au premier indicateur moyen I1_M. Ainsi, dans l'exemple des figures 1 et 3, les organes de production 12F et 12G sont connectés au réseau de transport 14. Les organes de production 12 connectés au réseau de transport 14 sont donc les organes mettant en vente leur énergie à partir d'un coût inférieur ou égal au prix du marché.

Lorsque l'organe 12 est un organe de consommation ou un organe de stockage, l'organe 12 est connecté au réseau de transport d'énergie 14 si le premier indicateur I1 de l'organe 12 est supérieur ou égal au premier indicateur moyen I1_M. Ainsi, dans l'exemple des figures 1 et 3, les organes de consommation 12A et 12B sont connectés au réseau de transport 14. Les organes de consommation 12 connectés au réseau de transport 14 sont donc les organes dont le coût d'achat d'énergie est supérieur ou égal au prix du marché.

Lorsque l'organe 12 est un organe de production ou un organe de stockage, l'organe 12 est déconnecté du réseau de transport d'énergie 14 si le premier indicateur I1 de l'organe 12 est supérieur au sens strict au premier indicateur moyen I1_M. Ainsi, dans l'exemple des figures 1 et 3, l'organe de stockage 12K est déconnecté du réseau de transport 14. Les organes de production 12 déconnectés du réseau de transport 14 sont donc les organes mettant en vente leur énergie à partir d'un coût strictement supérieur au prix du marché.

Lorsque l'organe 12 est un organe de consommation ou un organe de stockage, l'organe 12 est déconnecté du réseau de transport d'énergie 14 si le premier indicateur I1 de l'organe 12 est inférieur au sens strict au premier indicateur moyen I1_M. Ainsi, dans l'exemple des figures 1 et 3, l'organe de consommation 12C est déconnecté du réseau de transport 14. Les organes de consommation 12 déconnectés du réseau de transport 14 sont donc les organes dont le coût d'achat d'énergie est strictement inférieur au prix du marché.

Ainsi, les organes 12 de l'installation 10 sont propres à se connecter ou à se déconnecter du réseau de transport 14 de manière autonome. Chaque organe 12 a sa propre cadence de réaction notamment en termes d'hystérésis et de constante de temps de réaction qui est ajustée par chaque organe 12 afin d'éviter les oscillations et stabiliser l'état du réseau de transport 14.

Enfin, les étapes du procédé sont itérées à chaque changement d'un indicateur d'au moins un organe 12 ou à chaque changement du statut d'un organe 12. L'itération des étapes du procédé est représentée sur la figure 4 par la flèche 170.

Ainsi, le procédé de gestion permet d'adapter la production d'énergie à la consommation d'énergie. Les organes de production 12 fonctionnent donc à l'optimum de leur rendement et sont déconnectés du réseau de transport d'énergie 14 lorsque de tels organes ne sont pas sollicités par les organes de consommation 12. L'équilibre entre la consommation et la production d'énergie est réalisé par auto-convergence entre les prix des offres et les prix des demandes en énergie.

Dans la mesure où le procédé permet d'attribuer une priorité à un producteur ou à un consommateur, un tel procédé est adapté pour approvisionner en priorité les consommateurs ayant un besoin crucial en énergie, l'hôpital dans l'exemple précédent. En outre, un tel procédé permet également de favoriser l'utilisation de sources d'énergies renouvelables par rapport aux sources d'énergie non renouvelables en affectant une priorité plus haute aux sources renouvelables, par exemple en leur affectant un premier indicateur I1 de valeur faible, ce qui revient à les vendre à bas coût. Ainsi, le procédé est propre à faire diminuer la consommation en énergies non renouvelables.

Le réseau de transport d'énergie 14 étant divisé en sous-réseaux 17, 18, comprenant chacun un module de traitement 15, le réseau de transport 14 est plus robuste. En effet, une destruction d'une partie du réseau de transport 14 ou un disfonctionnement des organes 12 de production d'un sous-réseau n'affecte pas le fonctionnement des autres sous-réseaux.

En particulier, la mise en oeuvre de plusieurs modules de traitement 15, disposés en différents points du réseau de transport 14, permet à l'installation 10 de gérer de manière décentralisée les échanges d'énergie entre les organes 12. En outre, chaque module de traitement 15 permet d'avoir accès à l'historique des échanges d'énergie sur le réseau de transport 14 et à l'état actuel du réseau. Ainsi, il est possible d'avoir accès à tout moment et en n'importe quel endroit du réseau de transport 14 à l'historique et aux informations concernant l'ensemble des organes 12 connectés au réseau de transport 14.

L'installation 10 est donc résiliente, c'est-à-dire qu'une telle installation continue à fonctionner même en cas de panne. Du fait de sa robustesse et de sa résilience, une telle installation 10 est particulièrement adaptée pour desservir des sites isolés ou mal desservis tels que des îles, des camps retranchés ou encore des sites sur lesquels le réseau public est incertain.

En outre, l'installation 10 est simple d'utilisation. En effet, une telle installation est, par exemple, configurée avec une procédure « plug and play » (expression de langue anglaise traduite en « *connecte et joue* »), c'est-à-dire une procédure permettant aux périphériques d'un système d'être reconnus rapidement et automatiquement par un système d'exploitation dès le branchement du système et sans redémarrage du système d'exploitation.

De plus, la simplicité des indicateurs N, I1, I2 communiqués par chaque organe 12 permet de faciliter la mise en oeuvre du procédé et notamment de diminuer la puissance de calcul permettant la mise en oeuvre du procédé.

Avantageusement, chaque organe 12 dispose d'un système d'indentification permettant de remonter une alerte ou de recevoir un ordre émanent d'un superviseur. Un tel superviseur est utilisable de manière optionnel pour envoyer des ordres aux différents organes permettant d'ajuster la consommation et la production d'énergie.

Bien entendu, l'homme du métier comprendra que l'invention ne se limite pas à l'agencement des organes 12 décrits sur la figure 1, ni aux exemples particuliers de la description.

En variante ou en complément, chaque organe de production d'énergie 12 communique via le réseau de communication 13, un indicateur additionnel relatif à la distance en valeur absolue entre le point de fonctionnement actuel de l'organe 12 et le point de fonctionnement optimal de l'organe 12. Le point de fonctionnement est, par exemple, exprimé en litres de carburant par kilowattheure produit, en unité d'euros par kilowattheure produit, en unité de dollars par kilowattheure produit ou encore en pourcentages (%). Le point de fonctionnement actuel correspond au fonctionnement actuel de l'organe 12. Le point de fonctionnement optimal correspond au fonctionnement optimal de l'organe 12. Lorsque l'indicateur additionnel est égal à zéro, l'organe 12 fonctionne de manière optimale. Lorsque l'indicateur additionnel est supérieur à zéro, l'organe 12 ne fonctionne de pas de manière optimale.

Le procédé comprend ensuite la charge ou décharge d'énergie dans le réseau de transport 14 par les organes de stockage d'énergie 12, jusqu'à ce qu'au moins un ou l'ensemble des organes de production d'énergie 12 fonctionnent de manière optimale.

Une autre variante consiste, par exemple, à combiner un ou plusieurs exemples décrits précédemment.

## Revendications

1. Procédé de gestion décentralisée d'énergie dans une installation électrique (10), l'installation (10) comprenant :
- au moins un organe de consommation d'énergie électrique (12, 12A, 12B, 12C, 12D, 12E),
- au moins un organe de production d'énergie électrique (12, 12F, 12G, 12H, 12I, 12J),
- au moins un organe de stockage d'énergie électrique (12, 12K, 12L),
- un réseau de transport d'énergie (14), chaque organe (12) étant propre à être connecté ou déconnecté du réseau de transport d'énergie (14), le réseau de transport (14) étant divisé en au moins deux sous-réseaux (17, 18), chaque sous-réseau (17, 18) regroupant au moins un organe (12),
- un module de traitement (15) pour chaque sous-réseau (17, 18), la pluralité de modules de traitement (15) étant disposée en différents points du réseau de transport (14),
- un réseau de communication (13) connecté à chaque organe (12) et à chaque module de traitement (15), chaque organe (12) étant propre à émettre des données sur le réseau de communication (13) vers au moins un organe (12) et vers chaque module de traitement (15),
le procédé étant mis en oeuvre par chaque module de traitement (15), le procédé comprenant au moins une étape de :
- fourniture (100) de la nature (N) du fonctionnement de chaque organe (12) de chaque sous-réseau (17, 18), la nature (N) du fonctionnement de chaque organe (12) étant choisie dans le groupe comprenant : un organe de production d'énergie, un organe de consommation d'énergie et un organe de stockage d'énergie,
- fourniture (110) d'un premier indicateur (I1) relatif à une priorité de fonctionnement de chaque organe (12) de chaque sous-réseau (17, 18),
- fourniture (120) d'un deuxième indicateur (I2) relatif à un volume d'énergie nominal de fonctionnement de chaque organe (12) de chaque sous-réseau (17, 18),
- détermination (130), pour chaque organe (12) de chaque sous-réseau (17, 18), d'un indicateur global (IG) à partir de la nature (N), du premier indicateur (I1) et du deuxième indicateur (I2) fournis,
- calcul (140) d'un premier indicateur moyen (I1_M) à partir d'au moins un indicateur global (IG) d'un organe de production (12, 12F, 12G, 12H, 12I, 12J) et d'au moins un indicateur global (IG) d'un organe de consommation (12, 12A, 12B, 12C, 12D, 12E),
- comparaison (150), pour chaque organe (12) de chaque sous-réseau (17, 18), du premier indicateur (I1) au premier indicateur moyen (I1_M), et
- connexion ou déconnexion (160) de chaque organe (12) de chaque sous-réseau (17, 18) au réseau de transport d'énergie (14) en fonction de la comparaison et de la nature (N) de chaque organe (12),
les indicateurs fournis pour chaque organe dépendant d'au moins une caractéristique choisie dans le groupe comprenant : l'heure du jour, la période de l'année, la météo, les besoins opérationnels en énergie d'organe, l'autonomie en énergie de l'organe, la capacité de l'organe à produire de l'énergie, l'arrêt ou le fonctionnement de l'organe, les retours d'expérience sur le fonctionnement de l'organe, les défaillances de l'organe et une anticipation des besoins énergétiques de l'organe.

2. Procédé selon la revendication 1, dans lequel :
- lorsque l'organe (12) est un organe de production (12, 12F, 12G, 12H, 12I, 12J) ou un organe de stockage (12, 12K, 12L), le premier indicateur (I1) est le coût minimal de vente d'énergie, et
- lorsque l'organe (12) est un organe de consommation (12, 12A, 12B, 12C, 12D, 12E) ou un organe de stockage (12, 12K, 12L), le premier indicateur (I1) est le coût maximal d'achat d'énergie.

3. Procédé selon la revendication 1 ou 2, dans lequel :
- lorsque l'organe (12) est un organe de production (12, 12F, 12G, 12H, 12I, 12J) ou un organe de stockage (12, 12K, 12L), le deuxième indicateur (I2) est le volume d'énergie souhaité à la vente, et
- lorsque l'organe (12) est un organe de consommation (12, 12A, 12B, 12C, 12D, 12E) ou un organe de stockage (12, 12K, 12L), le deuxième indicateur (I2) est le volume d'énergie souhaité à l'achat.

4. Procédé selon l'une quelconque des revendications 1 à 3, dans lequel au moins un organe, parmi les organes (12) de consommation et les organes (12) de production, comprend deux sous-organes (12A_1, 12A_2), le procédé comprenant en outre :
- la fourniture du premier indicateur (I1) et du deuxième indicateur (I2) de chaque sous-organe (12A_1, 12A_2), au moins la valeur du premier indicateur (I1) d'un sous-organe (12A_1, 12A_2) étant différente de la valeur du premier indicateur (I1) de l'autre sous-organe (12A_1, 12A_2) du même organe (12) et/ou au moins la valeur du deuxième indicateur (I2) d'un sous-organe (12A_1, 12A_2) étant différente de la valeur du deuxième indicateur (I2) de l'autre sous-organe (12A_1, 12A_2) du même organe (12).

5. Procédé selon la revendication 4, dans lequel, pour chaque organe (12) comprenant deux sous-organes (12A_1, 12A_2),
- lorsque l'organe (12) est un organe de production (12, 12F, 12G, 12H, 12I, 12J) ou un organe de stockage (12, 12K, 12L), le deuxième indicateur (I2) de l'un des sous-organes (12A_1, 12A_2) de l'organe (12) est le volume minimal d'énergie souhaité à la vente, et
- lorsque l'organe (12) est un organe de consommation (12, 12A, 12B, 12C, 12D, 12E) ou un organe de stockage (12, 12K, 12L), le deuxième indicateur (I2) de l'un des sous-organes (12A_1, 12A_2) de l'organe (12) est le volume minimal d'énergie souhaité à l'achat.

6. Procédé selon l'une quelconque des revendications 1 à 5, dans lequel les indicateurs (I1, I2) fournis pour chaque organe (12) dépendent d'au moins une caractéristique choisie dans le groupe comprenant : l'heure du jour, la période de l'année, la météo, les besoins opérationnels en énergie de l'organe (12), l'autonomie en énergie de l'organe (12), la capacité de l'organe (12) à produire de l'énergie, l'arrêt ou le fonctionnement de l'organe (12), les retours d'expérience sur le fonctionnement de l'organe (12), les défaillances de l'organe (12) et une anticipation des besoins énergétiques de l'organe (12).

7. Procédé selon l'une quelconque des revendications 1 à 6, dans lequel :
- lorsque l'organe (12) est un organe de production (12, 12F, 12G, 12H, 12I, 12J) ou un organe de stockage (12, 12K, 12L), l'organe (12) est connecté au réseau de transport d'énergie (14) si le premier indicateur (I1) de l'organe (12) est inférieur ou égal au premier indicateur moyen (11_M), et
- lorsque l'organe (12) est un organe de consommation (12, 12A, 12B, 12C, 12D, 12E) ou un organe de stockage (12, 12K, 12L), l'organe (12) est connecté au réseau de transport d'énergie (14) si le premier indicateur (I1) de l'organe (12) est supérieur ou égal au premier indicateur moyen (I1_M).

8. Procédé selon l'une quelconque des revendications 1 à 7, dans lequel :
- lorsque l'organe (12) est un organe de production (12, 12F, 12G, 12H, 12I, 12J) ou un organe de stockage (12, 12K, 12L), l'organe (12) est déconnecté du réseau de transport d'énergie (14) si le premier indicateur (I1) de l'organe (12) est supérieur au sens strict au premier indicateur moyen (I1_M), et
- lorsque l'organe (12) est un organe de consommation (12, 12A, 12B, 12C, 12D, 12E) ou un organe de stockage (12, 12K, 12L), l'organe (12) est déconnecté du réseau de transport d'énergie (14) si le premier indicateur (I1) de l'organe (12) est inférieur au sens strict au premier indicateur moyen (11_M).

9. Produit programme d'ordinateur (16) comprenant des instructions logicielles, les instructions logicielles mettant en oeuvre un procédé selon l'une quelconque des revendications 1 à 8, lorsque les instructions logicielles sont exécutées par un ordinateur.

10. Support d'informations (40) sur lequel est mémorisé un produit programme d'ordinateur (16) selon la revendication 9.

11. Installation électrique (10) de gestion décentralisée d'énergie comprenant :
- au moins un organe de consommation d'énergie électrique (12, 12A, 12B, 12C, 12D, 12E),
- au moins un organe de production d'énergie électrique (12, 12F, 12G, 12H, 12I, 12J),
- au moins un organe de stockage d'énergie électrique (12, 12K, 12L),
- un réseau de transport d'énergie (14), chaque organe (12) étant propre à être connecté ou déconnecté du réseau de transport d'énergie (14), le réseau de transport (14) étant divisé en au moins deux sous-réseaux (17, 18), chaque sous-réseau (17, 18) regroupant au moins un organe (12),
- un module de traitement (15) pour chaque sous-réseau (17, 18), la pluralité de modules de traitement (15) étant disposée en différents points du réseau de transport (14),
- un réseau de communication (13) connecté à chaque organe (12) et à chaque module de traitement (15), chaque organe (12) étant propre à émettre des données sur le réseau de communication (13) vers au moins un organe (12) et vers chaque module de traitement (15),
- chaque module de traitement (15) étant configuré pour :
- recevoir la nature (N) du fonctionnement de chaque organe (12) de chaque sous-réseau (17, 18), la nature (N) du fonctionnement de chaque organe (12) étant choisie dans le groupe comprenant : un organe de production d'énergie, un organe de consommation d'énergie et un organe de stockage d'énergie,
- recevoir un premier indicateur (I1) relatif à une priorité de fonctionnement de chaque organe de chaque sous-réseau (17, 18),
- recevoir un deuxième indicateur (I2) relatif à un volume d'énergie nominal de fonctionnement de chaque organe de chaque sous-réseau (17, 18),
- déterminer, pour chaque organe (12) de chaque sous-réseau (17, 18), un indicateur global (IG) à partir de la nature (N), du premier indicateur (I1) et du deuxième indicateur (I2) fournis,
- calculer un premier indicateur moyen (I1_M) à partir d'au moins un indicateur global (IG) d'un organe de production (12, 12F, 12G, 12H, 12I, 12J) et d'au moins un indicateur global (IG) d'un organe de consommation (12, 12A, 12B, 12C, 12D, 12E),
- comparer, pour chaque organe (12) de chaque sous-réseau (17, 18), le premier indicateur (I1) au premier indicateur moyen (I1_M), et
- connecter ou déconnecter chaque organe (12) de chaque sous-réseau (17, 18) au réseau de transport d'énergie (14) en fonction de la comparaison et de la nature (N) de chaque organe (12),
les indicateurs fournis pour chaque organe dépendant d'au moins une caractéristique choisie dans le groupe comprenant : l'heure du jour, la période de l'année, la météo, les besoins opérationnels en énergie d'organe, l'autonomie en énergie de l'organe, la capacité de l'organe à produire de l'énergie, l'arrêt ou le fonctionnement de l'organe, les retours d'expérience sur le fonctionnement de l'organe, les défaillances de l'organe et une anticipation des besoins énergétiques de l'organe.

## Patentansprüche

1. Verfahren zur dezentralisierten Verwaltung von Energie in einer elektrischen Anlage (10), wobei die Anlage umfasst:
- mindestens ein Element (12, 12A, 12B, 12C, 12D, 12E) des Verbrauchs von elektrischer Energie,
- mindestens ein Element (12, 12F, 12G, 12H, 12I, 12J) zum Erzeugen von elektrischer Energie,
- mindestens ein Element (12, 12K, 12L) zum Speichern von elektrischer Energie
- ein Energietransportnetz (14), wobei jedes Element (12) geeignet ist, an das Energietransportnetz (14) angeschlossen oder von diesem getrennt zu werden, wobei das Energietransportnetz (14) in mindestens zwei Unternetze (17, 18) aufgeteilt ist und jedes Unternetz (17, 18) mindestens ein Element (12) zusammenfasst,
- ein Verarbeitungsmodul (15) für jedes Unternetz (17, 18), wobei die Mehrzahl von Verarbeitungsmodulen (15) an unterschiedlichen Punkten des Transportnetzes (14) angeordnet ist,
- ein Kommunikationsnetz (13), das mit jedem Element (12) und jedem Verarbeitungsmodul (15) verbunden ist, wobei jedes Element (12) geeignet ist, Daten auf dem Kommunikationsnetz (13) an mindestens ein Element (12) und an jedes Verarbeitungsmodul (15) zu senden,
wobei das Verfahren von jedem Verarbeitungsmodul (15) durchgeführt wird, wobei das Verfahren mindestens einen Schritt umfasst des:
Lieferns (100) der Natur (N) der Funktionsweise jedes Elementes (12) jedes Unternetzes (17, 18), wobei die Natur (N) der Funktionsweise jedes Elementes (12) aus der Gruppe ausgewählt ist, die umfasst: ein Element zum Erzeugen von Energie, ein Element des Verbrauchs von Energie und ein Element zum Speichern von Energie,
- Lieferns (110) eines ersten Indikators (I1), der sich auf eine Priorität der Funktionsweise jedes Elementes (12) jedes Unternetzes (17, 18) bezieht,
- Lieferns (120) eines zweiten Indikators (I2), der sich auf ein nominales Energievolumen der Funktionsweise jedes Elementes (12) jedes Unternetzes (17, 18) bezieht,
- Bestimmens (130) eines globalen Indikators (IG) aus der gelieferten Natur (N), dem gelieferten ersten Indikator (I1) und dem gelieferten zweiten Indikator (I2) für jedes Element (12) jedes Unternetzes (17, 18),
- Berechnens (140) eines ersten mittleren Indikators (I1_M) aus mindestens einem globalen Indikator (IG) eines Erzeugungselementes (12, 12F, 12G, 12H, 12I, 12J) und mindestens einem globalen Indikator (IG) eines Verbrauchselementes (12, 12A, 12B, 12C, 12D, 12E),
- Vergleichens (150) des ersten Indikators (I1) mit dem mittleren ersten Indikator (I1_M) für jedes Element (12) des Unternetzes (17, 18) und
- Verbindens oder Trennens (160) jedes Elementes (12) jedes Unternetzes (17, 18) mit oder von dem Energietransportnetz (14) abhängig von dem Vergleich und der Natur (N) jedes Elementes (12),
wobei die für jedes Element gelieferten Indikatoren von mindestens einer Eigenschaft abhängen, ausgewählt aus der Gruppe, die umfasst: Tageszeit, Zeit des Jahres, Wettervorhersage, betriebliche Erfordernisse an Energie des Elementes, Autonomie an Energie des Elementes, Kapazität des Elementes, Energie zu erzeugen, Stillstand oder Betrieb des Elementes, Erfahrungswerte über die Funktionsweise des Elementes, Störungen des Elementes und Erwartung der energetischen Anforderungen des Elementes.

2. Verfahren nach Anspruch 1, bei dem:
- wenn das Element (12) ein Erzeugungselement (12, 12F, 12G, 12H, 12I, 12J) oder ein Speicherelement (12, 12K, 12L) ist, der erste Indikator (I1) die minimalen Kosten des Verkaufs von Energie ist und
- wenn das Element ein Verbrauchselement (12, 12A, 12B, 12C, 12D, 12E) oder ein Speicherelement (12, 12K, 12L) ist, der erste Indikator (I1) die maximalen Kosten des Kaufs von Energie ist.

3. Verfahren nach Anspruch 1 oder 2, bei dem:
- wenn das Element (12) ein Erzeugungselement (12, 12F, 12G, 12H, 12I, 12J) oder ein Speicherelement (12, 12K, 12L) ist, der zweite Indikator (I2) das für den Verkauf gewünschte Energievolumen ist und
- wenn das Element (12) ein Verbrauchselement (12, 12A, 12B, 12C, 12D, 12E) oder einen Speicherelement (12, 12K, 12L) ist, der zweite Indikator (I2) das für den Kauf gewünschte Energievolumen ist.

4. Verfahren nach einem beliebigen der Ansprüche 1 bis 3, bei dem mindestens ein Element unter den Verbrauchselementen (12) und den Erzeugungselementen (12) zwei Unterelemente (12A_1, 12A_2) umfasst, wobei das Verfahren außerdem umfasst:
- Liefern des ersten Indikators (I1) und des zweiten Indikators (I2) jedes Unterelementes (12A_1, 12A_2), wobei mindestens der Wert des ersten Indikators (I1) eines Unterelementes (12A_1, 12A_2) zu dem Wert des ersten Indikators (I1) des anderen Unterelementes (12A_1, 12A_2) desselben Elementes (12) unterschiedlich ist und/oder mindestens der Wert des zweiten Indikators (I2) eines Unterelementes (12A_1, 12A_2) zu dem Wert des zweiten Indikators (I2) des anderen Unterelementes (12A_1, 12A_2) desselben Elementes (12) unterschiedlich ist.

5. Verfahren nach Anspruch 4, bei dem für jedes zwei Unterelemente (12A_1, 12A_2) umfassende Element (12),
- wenn das Element (12) ein Erzeugungselement (12, 12F, 12G, 12H, 12I, 12J) oder ein Speicherelement (12, 12K, 12L) ist, der zweite Indikator (I2) des einen der Unterelemente (12A_1, 12A_2) des Elementes (12) das minimale gewünschte Energievolumen für den Verkauf ist, und
- wenn das Element (12) ein Verbrauchselement (12, 12A, 12B, 12C, 12D, 12E) oder ein Speicherelement (12, 12K, 12L) ist, der zweite Indikator (I2) des einen der Unterelemente (12A_1, 12A_2) des Elementes (12) ein gewünschtes minimales Energievolumen für den Kauf ist.

6. Verfahren nach einem beliebigen der Ansprüche 1 bis 5, bei dem die Indikatoren (I1, I2), die von jedem Element (12) geliefert werden, mindestens von einer Eigenschaft abhängen, die ausgewählt ist aus der Gruppe, die umfasst: Tageszeit, Zeit des Jahres, Wettervorhersage, betriebliche Erfordernisse an Energie des Elementes (12), Autonomie an Energie des Elementes (12), Kapazität des Elementes (12), Energie zu erzeugen, Stillstand oder Betrieb des Elementes (12), Erfahrungswerte über die Funktionsweise des Elementes (12), Störungen des Elementes (12) und Erwartung der energetischen Anforderungen des Elementes (12).

7. Verfahren nach einem beliebigen der Ansprüche 1 bis 6, bei dem:
- im Fall, dass das Element (12) ein Erzeugungselement (12, 12F, 12G, 12H, 12I, 12J) oder ein Speicherelement (12, 12K, 12L) ist, das Element (12) mit dem Energietransportnetz verbunden wird, wenn der erste Indikator (I1) des Elementes (12) kleiner als ein erster mittlerer Indikator (I1_M) oder gleich diesem ist, und
- im Fall, dass das Element ein Verbrauchselement (12, 12A, 12B, 12C, 12D, 12E) oder ein Speicherelement (12, 12K, 12L) ist, das Element (12) mit dem Energietransportnetz (14) verbunden wird, wenn der erste Indikator (I1) des Elementes (12) größer als ein erster mittlerer Indikator (I1_M) oder gleich diesem ist.

8. Verfahren nach einem beliebigen der Ansprüche 1 bis 7, bei dem:
- im Fall, dass das Element (12) ein Erzeugungselement (12, 12F, 12G, 12H, 12I, 12J) oder ein Speicherelement (12, 12K, 12L) ist, das Element (12) von dem Energietransportnetz (14) getrennt wird, wenn der erste Indikator (I1) des Elementes (12) im engen Sinn größer als der mittlere erste Indikator (I1_M) ist, und
- im Fall, dass das Element 12) ein Verbrauchselement (12, 12A, 12B, 12C, 12D, 12E) oder ein Speicherelement (12, 12K, 12L) ist, das Element (12) von dem Energietransportnetz (14) getrennt wird, wenn der erste Indikator (I1) des Elementes (12) kleiner im engen Sinn als der erste mittlere Indikator (I1_M) ist.

9. Rechnerprogrammprodukt (16), das Softwarebefehle umfasst, wobei die Softwarebefehle ein Verfahren nach einem beliebigen der Ansprüche 1 bis 8 durchführen, wenn die Softwarebefehle auf einem Rechner ausgeführt werden.

10. Datenträger (40), auf dem ein Rechnerprogrammprodukt (16) nach Anspruch 9 gespeichert ist.

11. Elektrische Anlage (10) zur dezentralen Verwaltung von Energie, umfassend:
- mindestens ein Element (12, 12A, 12B, 12C, 12D, 12E) des Verbrauchs von elektrischer Energie,
- mindestens ein Element (12, 12F, 12G, 12H, 12I, 12J) zum Erzeugen von elektrischer Energie,
- mindestens ein Element (12, 12K, 12L) zum Speichern von elektrischer Energie
- ein Energietransportnetz (14), wobei jedes Element (12) geeignet ist, an das Energietransportnetz (14) angeschlossen oder von diesem getrennt zu werden, wobei das Energietransportnetz (14) in mindestens zwei Unternetze (17, 18) aufgeteilt ist und jedes Unternetz (17, 18) mindestens ein Element (12) zusammenfasst,
- ein Verarbeitungsmodul (15) für jedes Unternetz (17, 18), wobei die Mehrzahl von Verarbeitungsmodulen (15) an unterschiedlichen Punkten des Transportnetzes (14) angeordnet ist,
- ein Kommunikationsnetz (13), das mit jedem Element (12) und jedem Verarbeitungsmodul (15) verbunden ist, wobei jedes Element (12) geeignet ist, Daten auf dem Kommunikationsnetz (13) an mindestens ein Element (12) und an jedes Verarbeitungsmodul (15) zu senden,
wobei jedes Verarbeitungsmodul (15) ausgebildet ist zum:
Empfangen der Natur (N) der Funktionsweise jedes Elementes (12) jedes Unternetzes (17, 18), wobei die Natur (N) der Funktionsweise jedes Elementes (12) aus der Gruppe ausgewählt ist, die umfasst: ein Element zum Erzeugen von Energie, ein Element des Verbrauchs von Energie und ein Element zum Speichern von Energie,
- Empfangen eines ersten Indikators (I1), der sich auf eine Priorität der Funktionsweise jedes Elementes (12) jedes Unternetzes (17, 18) bezieht,
- Empfangen eines zweiten Indikators (I2), der sich auf ein nominales Energievolumen der Funktionsweise jedes Elementes (12) jedes Unternetzes (17, 18) bezieht,
- Bestimmen eines globalen Indikators (IG) aus der gelieferten Natur (N), dem gelieferten ersten Indikator (I1) und dem gelieferten zweiten Indikator (I2) für jedes Element (12) jedes Unternetzes (17, 18),
- Berechnen eines ersten mittleren Indikators (I1_M) aus mindestens einem globalen Indikator (IG) eines Erzeugungselementes (12, 12F, 12G, 12H, 12I, 12J) und mindestens einem globalen Indikator (IG) eines Verbrauchselementes (12, 12A, 12B, 12C, 12D, 12E),
- Vergleichen des ersten Indikators (I1) mit dem mittleren ersten Indikator (I1_M) für jedes Element (12) des Unternetzes (17, 18) und
- Verbinden oder Trennen jedes Elementes (12) jedes Unternetzes (17, 18) mit oder von dem Energietransportnetz (14) abhängig von dem Vergleich und der Natur (N) jedes Elementes (12),
wobei die für jedes Element gelieferten Indikatoren von mindestens einer Eigenschaft abhängen, ausgewählt aus der Gruppe, die umfasst: Tageszeit, Zeit des Jahres, Wettervorhersage, betriebliche Erfordernisse an Energie des Elementes, Autonomie an Energie des Elementes, Kapazität des Elementes, Energie zu erzeugen, Stillstand oder Betrieb des Elementes, Erfahrungswerte über die Funktionsweise des Elementes, Störungen des Elementes und Erwartung der energetischen Anforderungen des Elementes.

## Claims

1. A method for managing energy in a decentralized way in an electric installation (10), the installation (10) comprising:
- at least one electric energy consumption unit (12, 12A, 12B, 12C, 12D, 12E),
- at least one electric energy production unit (12, 12F, 12G, 12H, 121, 12J),
- at least one electric energy storage unit (12, 12K, 12L),
- an energy transport network (14), each unit (12) being able to be connected to or disconnected from the energy transport network (14), the transport network (14) being divided in at least two sub-networks (17, 18), each sub-network (17, 18) grouping at least one unit (12),
- a processing module (15) for each sub-network (17, 18), the plurality of processing modules (15) being arranged at different points of the transport network (14),
- a communications network (13) connected to each unit (12) and to each processing module (15), each unit (12) being able to transmit data over the communications network (13) towards at least one unit (12) and towards each processing module (15),
the method being implemented by each processing module (15), the method comprising at least one step for:
- providing (100) the nature (N) of the operation of each unit (12) of each sub-network (17, 18), the nature (N) of the operation of each unit (12) being selected from the group comprising: an energy production, an energy consumption unit and an energy storage unit,
- providing (110) a first indicator (11) relative to a priority operation of each unit (12) of each sub-network (17, 18),
- providing (120) a second indicator (12) relative to a rated energy volume of operation of each unit (12) of each sub-network (17, 18),
- determining (130), for each unit (12) of each sub-network (17, 18), a global indicator (IG) starting from the nature (N), from the provided first indicator (11) and second indicator (12),
- calculating (140) for each average indicator (I1_M) from at least one global indicator (IG) of a production unit (12, 12F, 12G, 12H, 121, 12J) and from at least one global indicator (IG) of a consumption unit (12, 12A, 12B, 12C, 12D, 12E),
- comparing (150), for each unit (12) of each sub-network (17, 18), the first indicator (11) with the first average indicator (I1_M), and
- connecting to or disconnecting (160) each unit (12) of each sub-network (17, 18) from the energy transport network (14) depending on the comparison and on the nature (N) of each unit (12),
the indicators provided for each unit depending on at least one characteristic selected from the group comprising: the time of the day, the period of the year, the weather, the operational energy needs of the unit, the energy autonomy of the unit, the capability of the unit of producing energy, the stopping or the operation of the unit, the feedback on the operation of the unit, the failures of the unit and an anticipation of the energy needs of the unit.

2. The method according to claim 1, wherein:
- when the unit (12) is a production unit (12, 12F, 12G, 12H, 121, 12J) or a storage unit (12, 12K, 12L), the first indicator (11) is the minimum energy selling price, and
- when the unit (12) is a consumption unit (12, 12A, 12B, 12C, 12D, 12E) or a storage unit (12, 12K, 12L), the first indicator (11) is the maximum energy purchase price.

3. The method according to claim 1 or 2, wherein:
- when the unit (12) is a production unit (12, 12F, 12G, 12H, 121, 12J) or a storage unit (12, 12K, 12L), the second indicator (12) is the desired energy volume to be sold, and
- when the unit (12) is a consumption unit (12, 12A, 12B, 12C, 12D, 12E) or a storage unit (12, 12K, 12L), the second indicator (12) is the desired energy volume to be purchased.

4. The method according to any one of claims 1 to 3, wherein at least one unit, from among the consumption units (12) and the production units (12), comprises two sub-units (12A_1, 12A_2), the method further comprising:
- providing the first indicator (11) and the second indicator (12) of each sub-unit (12A_1, 12A_2), at least the value of the first indicator (11) of a sub-unit (12A_1, 12A_2) being different from the value of the first indicator (11) of the other sub-unit (12A_1, 12A_2) of the same unit (12) and/or at least the value of the second indicator (12) of a sub-unit (12A_1, 12A_2) being different from the value of the second indicator (12) of the other sub-unit (12A_1, 12A_2) of the same unit (12).

5. The method according to claim 4, wherein, for each unit (12) comprising two sub-units (12A_1, 12A_2),
- when the unit (12) is a production unit (12, 12F, 12G, 12H, 121, 12J) or a storage unit (12, 12K, 12L), the second indicator (12) of one of the sub-units (12A_1, 12A_2) of the unit (12) is the desired minimum energy volume to be sold, and
- when the unit (12) is a consumption unit (12, 12A, 12B, 12C, 12D, 12E) or a storage unit (12, 12K, 12L), the second indicator (12) of one of the sub-units (12A_1, 12A_2) of the unit (12) is the desired minimum energy volume to be purchased.

6. The method according to any one of claims 1 to 5, wherein the indicators (11, 12) provided for each unit (12) depend on at least one characteristic selected from the group comprising: the time of the day, the period of the year, the weather, the operational energy needs of the unit (12), the energy autonomy of the unit (12), the capability of the unit (12) of producing energy, the stopping or the operation of the unit (12), the feedback on the operation of the unit (12), the failures of the unit (12) and an anticipation of the energy needs of the unit (12).

7. The method according to any one of claims 1 to 6, wherein:
- when the unit (12) is a production unit (12, 12F, 12G, 12H, 121, 12J) or a storage unit (12, 12K, 12L), the unit (12) is connected to the energy transport network (14) if the first indicator (11) of the unit (12) is less than or equal to the first average indicator (I1_M), and
- when the unit (12) is a consumption unit (12, 12A, 12B, 12C, 12D, 12E) or a storage unit (12, 12K, 12L), the unit (12) is connected to the energy transport network (14) if the first indicator (11) of the unit (12) is greater than or equal to the first average indicator (I1_M).

8. The method according to any one of claims 1 to 7, wherein:
- when the unit (12) is a production unit (12, 12F, 12G, 12H, 121, 12J) or a storage unit (12, 12K, 12L), the unit (12) is disconnected from the energy transport network (14) if the first indicator (11) of the unit (12) is strictly greater than the first average indicator (I1_M), and
- when the unit (12) is a consumption unit (12, 12A, 12B, 12C, 12D, 12E) or a storage unit (12, 12K, 12L), the unit (12) is disconnected from the energy transport network (14) if the first indicator (11) of the unit (12) is strictly less than the first average indicator (I1_M).

9. A computer program product (16) comprising software instructions, the software instructions applying a method according to any one of claims 1 to 8, when the software instructions are executed by a computer.

10. An information medium (40) on which a computer program product (16) according to claim 9, is stored in memory.

11. An electric installation (10) for managing energy in a decentralized way comprising:
- at least one electric energy consumption unit (12, 12A, 12B, 12C, 12D, 12E),
- at least one electric energy production unit (12, 12F, 12G, 12H, 121, 12J),
- at least one electric energy storage unit (12, 12K, 12L),
- an energy transport network (14), each unit (12) being able to be connected to or disconnected from the energy transport network (14), the transport network (14) being divided into at least two sub-networks (17, 18), each sub-network (17, 18) grouping at least one unit (12),
- a processing module (15) for each sub-network (17, 18), the plurality of processing modules (15) being arranged at different points of the transport network (14),
- a communications network (13) connected to each unit (12) and to each processing module (15), each unit (12) being able to transmit data over the communications network (13) to at least one unit (12) and to each processing module (15),
- each processing module (15) being configured for:
- receiving the nature (N) of the operation of each unit (12) of each sub-network (17, 18), the nature (N) of the operation of each unit (12) being selected from the group comprising: an energy production unit, an energy consumption unit and an energy storage unit,
- receiving a first indicator (11) relative to a operating priority of each unit of each sub-network (17, 18),
- receiving a second indicator (12) relative to a rated energy volume of operation of each unit of each sub-network (17, 18),
- determining, for each unit (12) of each sub-network (17, 18), a global indicator (IG) from the nature (N), from the first indicator (11) and from the second indicator (12) which are provided,
- calculating a first average indicator (I1_M) from at least one global indicator (IG) of a production unit (12, 12F, 12G, 12H, 121, 12J) and from at least one global indicator (IG) of a consumption unit (12, 12A, 12B, 12C, 12D, 12E),
- comparing, for each unit (12) of each sub-network (17, 18), the first indicator (11) with the first average indicator (I1_M), and
- connecting to or disconnecting each unit (12) of each sub-network (17, 18) from the energy transport network (14) depending on the comparison and on the nature (N) of each unit (12),
the indicators provided for each unit depending on at least one characteristic selected from the group comprising: the time of the day, the period of the year, the weather, the operational energy needs of the unit, the energy autonomy of the unit, the capability of the unit of producing energy, the stopping or the operation of the unit, the feedback on the operation of the unit, the failures of the unit and an anticipation of the energy needs of the unit.
